# FASCICULE DE BREVET EUROPEEN

(11) **EP 2 393 712 B1**
(45) Date de publication et mention de la délivrance du brevet: **10.07.2013**
(21) Numéro de dépôt: 10707330.6
(22) Date de dépôt: 21.01.2010
(51) Int. Cl.: B64D 29/06, B64D 27/26

(54) **ENSEMBLE DE SUSPENSION POUR TURBORÉACTEUR D'AÉRONEF**
HÄNGEANORDNUNG FÜR EINEN FLUGZEUG-TURBODÜSENMOTOR
SUSPENSION ASSEMBLY FOR AN AIRCRAFT TURBOJET ENGINE

(30) Priorité: 04.02.2009 FR 0900470
(43) Date de publication de la demande: 14.12.2011
(73) Titulaire: Aircelle, 76700 Gonfreville l'Orcher (FR)
(72) Inventeur: CARUEL, Pierre, F-76600 Le Havre (FR); VAUCHEL, Guy Bernard, F-76700 Harfleur (FR)
(74) Mandataire: Gaillarde, Frédéric F. Ch.
(86) Numéro de dépôt international: PCT/FR2010/050090
(87) Numéro de publication internationale: WO 2010/089487

(56) Documents cités:
- FR-A- 2 891 250
- US-A- 2 655 090
- US-A- 2 724 948
- US-A- 5 385 013

## Description

La présente invention se rapporte à un ensemble de suspension pour turboréacteur d'aéronef, et à un ensemble propulsif comprenant un tel ensemble de suspension, un turboréacteur et une nacelle. Un exemple de l'art antérieur est fourni par le document FR 2891250 A1.

Comme cela est connu de la technique antérieure, un turboréacteur d'aéronef est logé à l'intérieur d'une nacelle et relié à un mât permettant la suspension de l'ensemble propulsif ainsi constitué sous une aile d'aéronef ou adjacent au fuselage.

Des bielles de reprise de poussée sont interposées entre le mât et le générateur de gaz du turboréacteur, de manière à reprendre les efforts engendrés par la poussée du moteur.

Dans les ensembles propulsifs de la technique antérieure, ces bielles sont soumises à des températures très élevées engendrées notamment par la chambre de combustion du moteur, ce qui nécessite l'utilisation d'alliages d'acier particuliers, dont le poids est important.

La présente invention a notamment pour but de fournir des moyens permettant l'utilisation de matériaux moins lourds pour les bielles de reprise de poussée.

On atteint ce but de l'invention avec un ensemble de suspension pour turboréacteur d'aéronef, comprenant un mât et des bielles de reprise de la poussée dudit turboréacteur reliées audit mât, remarquable en ce qu'il comprend des moyens, distincts dudit mât, pour isoler thermiquement lesdites bielles par rapport audit turboréacteur.

La présence des moyens d'isolation thermique des bielles permet d'isoler celles-ci du rayonnement et de la convection de la chaleur émise par le moteur : ces bielles peuvent donc être réalisées dans des matériaux moins résistants à la chaleur et plus légers, tels que le titane, l'aluminium ou des matériaux composites.

Suivant d'autres caractéristiques optionnelles de l'ensemble de suspension selon l'invention :
- lesdits moyens d'isolation comprennent des gaines d'isolation indépendantes pour chaque bielle de reprise de poussée : ces gaines permettent de réaliser de manière très simple l'isolation des bielles ;
- lesdits moyens d'isolation comprennent une gaine d'isolation commune auxdites bielles : cette solution permet de réduire le nombre de pièces ;
- ladite ou lesdites gaine(s) sont amovibles : ceci permet de faciliter l'inspection des bielles ;
- lesdits moyens d'isolation thermique comprennent une cloison d'isolation positionnée entre lesdites bielles de reprise de poussée et la zone destinée à être occupée par ledit turboréacteur : cette solution permet en outre de protéger le mât vis-à-vis de la chaleur, et ainsi de réaliser au moins une partie du mât en matériaux composites, et donc de réduire encore le poids de l'ensemble ;
- ladite cloison est fixée sur ledit mât et/ou sur lesdites bielles et/ou est apte à être fixée sur ledit turboréacteur ;
- ladite cloison est apte à agir en tant que barrière feu en cas d'incendie dans le compartiment moteur, de façon à empêcher sa propagation aux bielles de reprise de poussée et au mât ;
- des joints d'étanchéité sont interposés entre ladite cloison d'isolation et la structure interne de la dite nacelle : la présence de ces joints permet d'empêcher le transfert de chaleur du moteur par convection thermique, ainsi que la propagation d'une flamme ou de gaz chauds en cas de feu dans le compartiment moteur..

La présente invention se rapporte également à un ensemble propulsif, comprenant un ensemble de suspension conforme à ce qui précède, un turboréacteur suspendu audit ensemble de suspension, et une nacelle enveloppant ledit ensemble de suspension et ledit turboréacteur.

De manière optionnelle, ledit ensemble propulsif peut comprendre des canaux de prélèvement d'air dans la zone de flux secondaire de ladite nacelle, pour refroidir lesdits moyens d'isolation thermique : ces canaux contribuent au maintien des bielles à basse température.

D'autres caractéristiques et avantages de la présente invention apparaîtront à la lumière de la description qui va suivre, et à l'examen des figures ci-annexées, dans lesquelles :
- la figure 1 représente une vue en perspective d'un premier mode de réalisation d'un ensemble selon l'invention,
- la figure 2 représente (à plus grande échelle) une vue en coupe transversale d'une bielle de reprise de poussée d'un ensemble selon l'invention réalisé conformément à un autre mode de réalisation,

- les figures 3 et 4 sont des vues de devant et de derrière, légèrement.en perspective, d'un ensemble selon l'invention réalisé conformément à encore un autre mode de réalisation,
- les figures 5 et 6 sont des vues correspondant respectivement aux figures 3 et 4, lorsque l'ensemble selon l'invention est représenté en position de maintenance, et
- les figures 7 et 8 sont des vues en coupe schématique de l'ensemble des figures 3 à 6, représenté respectivement en position de fonctionnement normal et en position de maintenance.

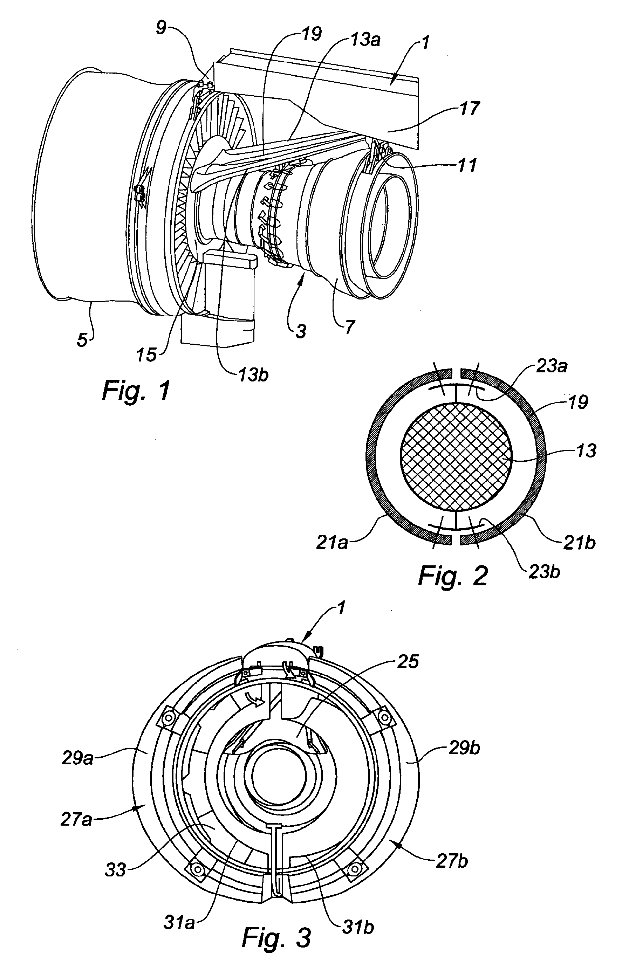

En se reportant à la figure 1, on peut voir que l'ensemble selon l'invention comprend un mât 1 destiné à être fixé sous une aile d'avion, adapté pour supporter un turboréacteur 3 comportant une partie amont formant soufflante 5 et une partie aval formant générateur de gaz 7.

Le mât 1 est relié respectivement à ces parties amont et aval du turboréacteur 3 par des ferrures amont 9 et aval 11.

Des bielles de reprise de poussée 13a et 13b s'étendent classiquement entre la partie amont 15 du générateur de gaz 7 et la partie arrière 17 du mât 1.

Ces deux bielles 13a, 13b sont écartées l'une de l'autre dans la zone 15, et convergent en direction de la zone arrière 17 du mât 1.

Une gaine d'isolation thermique 19, pouvant être formée par exemple d'une tôle en titane ou acier, ou d'une couverture composée d'un film d'acier inoxydable encapsulant un matériau isolant comme de la fibre de silice enveloppe simultanément les deux bielles de reprise de poussée 13a et 13b, formant ainsi d'une part une isolation thermique de ces deux bielles vis-à-vis de la chaleur émise par le générateur de gaz 7, et d'autre part un écran de protection contre la chaleur pour le mât 1.

Cette gaine 19 qui enveloppe les deux bielles de reprise de poussée est de préférence formée de deux demi-gaines fixées de manière amovible l'une sur l'autre, ce qui permet d'accéder rapidement aux bielles 13a, 13b pour un examen visuel et/ou pour des opérations de maintenance.

L'ensemble selon l'invention comprend en outre une nacelle apte à envelopper le turboréacteur 3, non représentée sur la figure 1, mais représentée sur les figures 3 à 8 qui seront commentées plus loin.

En solution alternative à une unique gaine 19 qui enveloppe les deux bielles de reprise de poussée 13a, 13b, on peut envisager une gaine 19 pour chaque bielle 13, comme cela est visible sur la figure 2.

Comme cela est visible sur cette figure, chaque gaine 19 peut être formée de deux demi gaines 21 a, 21 b, reliées à la bielle 13 par l'intermédiaire de supports de gaine 23a, 23b.

A noter que dans le mode de réalisation de la figure 1 comme dans celui de la figure 2, la gaine 19 peut s'étendre sur toute ou partie de la longueur des bielles de reprise de poussée 13a, 13b.

A noter également que les ferrures amont 9 et aval 11 peuvent aussi être recouvertes par des gaines d'isolation thermique.

Dans le mode de réalisation des figures 3 à 8, une cloison 25 est interposée entre le générateur de gaz 7 et les bielles de reprise de poussée 13a, 13b.

On peut voir sur ces figures 3 à 8 la nacelle faisant partie de l'ensemble selon l'invention.

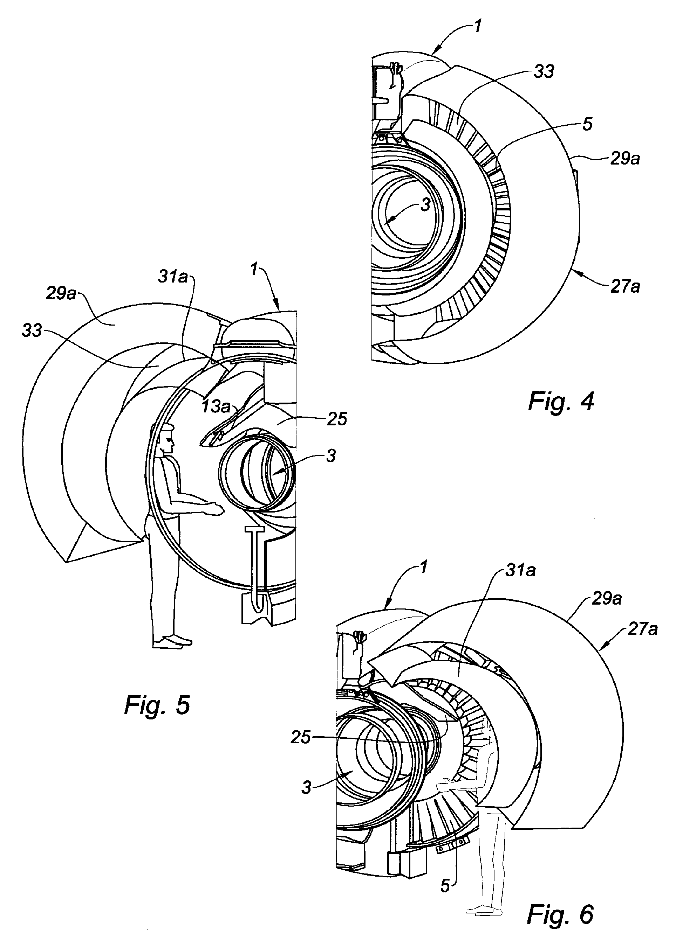

Cette nacelle comporte deux demi coques 27a, 27b, montées chacune pivotante autour du mât 1 entre une position de fonctionnement normal visible sur les figures 3, 4 et 7, et une position de maintenance, représentée sur les figures 5, 6 et 8.

Chaque demi-coque 27a, 27b comporte une structure externe 29a, 29b, et une structure interne 31 a, 31 b, ces structures externe et interne définissant un canal annulaire 33 dans lequel circule l'air frais envoyé par la soufflante 5.

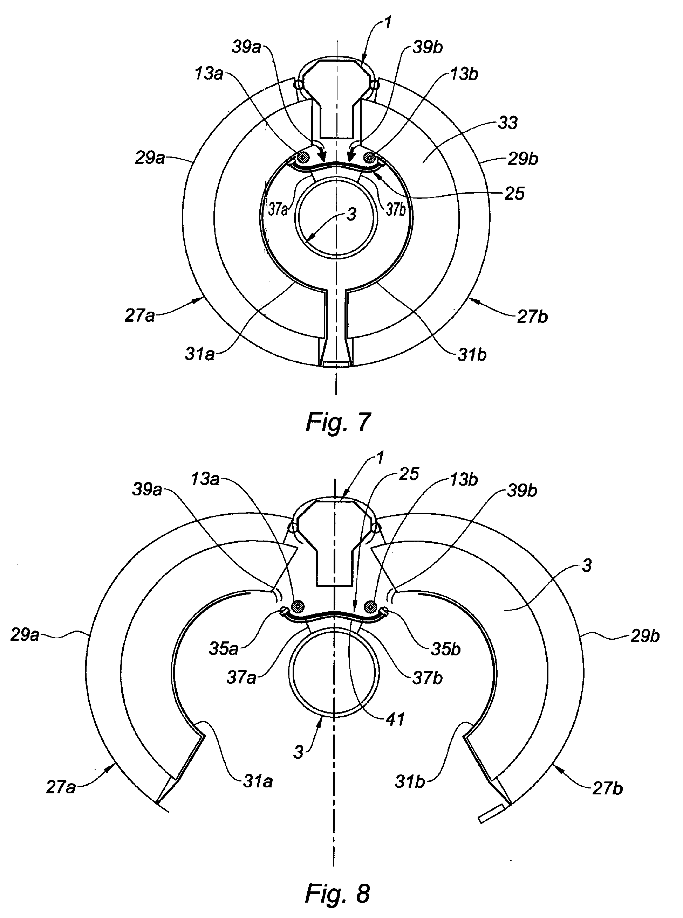

La cloison 25, qui s'étend sensiblement sur toute la longueur du générateur de gaz 7, comporte sur ses bords latéraux des joints 35a, 35b coopérant avec les structures internes 31 a, 31 b en position de fonctionnement normal (voir figure 7).

Ces joints permettent de réaliser une étanchéité entre la cloison 25 et les structures internes 31 a, 31 b, ce qui permet de parfaire l'isolation thermique des bielles de reprise de poussée 13a, 13b et du mât 1 par rapport au générateur de gaz 7.

Comme cela est visible notamment sur les figures 7 et 8, la cloison 25 peut être maintenue sur le générateur de gaz 7 par l'intermédiaire de support 37a, 37b, mais cette cloison peut être également maintenue, de manière alternative ou supplémentaire, par des supports (non représentés) fixés sur les bielles de reprise de poussée 13a, 13b.

Cette cloison 25 pourrait encore être soutenue par des moyens de support reliés au mât 1.

On prévoit de préférence des prises d'air 39a, 39b dans le flux d'air frais circulant dans le canal annulaire 33, de manière à contribuer au maintien à basse de température des bielles de reprise de poussée 13a, 13b.

A noter que la cloison 25 peut être formée dans un matériau résistant aux températures élevées (tôle de titane ou d'acier par exemple) ou bien être revêtue d'une couverture thermique 41 résistant aux températures élevées, comme cela est représenté sur les figures 6 et 8.

Les avantages de la présente invention résultent directement de la description qui précède : l'isolation thermique des bielles de reprise de poussée 13a, 13b permet de maintenir celles-ci à des températures relativement basses, et ce a fortiori si elles sont refroidies par de l'air en provenance du flux froid engendré par la soufflante.

Ce maintien à basses températures permet de réaliser les bielles de reprise de poussée dans des matériaux moins résistants aux hautes températures, mais plus légers, tels que le titane, l'aluminium ou des matériaux composite.

Dans le cas particulier du mode de réalisation des figures 3 à 8, la cloison 25 permet en outre d'isoler le mât 1 vis-à-vis de la chaleur rayonnée par le générateur de gaz 7, ce qui permet d'envisager de fabriquer ce mât également en matériaux plus légers.

On notera que dans l'ensemble des modes de réalisation ci-dessus exposés, l'accès visuel et physique aux bielles de reprise de poussée est très facile : dans les modes de réalisation des figures 1 et 2, il suffit d'ôter les gaines 19 entourant les bielles de reprise de poussée ; dans le mode de réalisation des figures 3 à 8, il suffit d'ouvrir les deux demi-coques 27a et 27b pour qu'un opérateur puisse immédiatement contrôler l'état des bielles de reprise de poussée (voir figures 5 et 6).

Bien entendu, la présente invention n'est nullement limitée aux modes de réalisations décrits et représentés, fournis à titre de simples exemples.

On notera que la présente invention peut s'appliquer tant à une nacelle à inverseur de poussée à grilles ou à porte qu'à une nacelle dite lisse (sans inverseur de poussée).

## Revendications

1. Ensemble de suspension pour turboréacteur (3) d'aéronef, comprenant un mât (1) et des bielles (13a, 13b) de reprise de la poussée dudit turboréacteur (3) reliées audit mât (1), **caractérisé en ce qu'**il comprend des moyens (19, 25), distincts dudit mât (1), pour isoler thermiquement lesdites bielles (13a, 13b) par rapport audit turboréacteur (3).

2. Ensemble de suspension selon la revendication 1, **caractérisé en ce que** lesdits moyens d'isolation comprennent des gaines d'isolation indépendantes pour chaque bielle de reprise de poussée (13a, 13b).

3. Ensemble de suspension selon la revendication 1, **caractérisé en ce que** lesdits moyens d'isolation comprennent une gaine d'isolation (19) commune auxdites bielles (13a, 13b).

4. Ensemble de suspension selon l'une des revendications 2 ou 3, **caractérisé en ce que** ladite ou lesdites gaine(s) (19) sont amovibles.

5. Ensemble de suspension selon la revendication 1, **caractérisé en ce que** lesdits moyens d'isolation thermique comprennent une cloison d'isolation (25) positionnée entre lesdites bielles de reprise de poussée (13a, 13b) et la zone destinée à être occupée par ledit turboréacteur (3).

6. Ensemble de suspension selon la revendication 5, **caractérisé en ce que** ladite cloison (25) est fixée sur ledit mât (1) et/ou sur lesdites bielles (13a, 13b) et/ou est apte à être fixée sur ledit turboréacteur (3).

7. Ensemble de suspension selon l'une des revendications 5 ou 6, **caractérisé en ce que** des joints d'étanchéité (35a, 35b) sont disposés sur les bords de ladite cloison (25) qui sont destinés à coopérer avec une structure interne (31 a, 31 b) de nacelle.

8. Ensemble propulsif, comprenant un ensemble de suspension conforme à l'une quelconque des revendications précédentes, un turboréacteur (3) suspendu audit ensemble de suspension, et une nacelle enveloppant ledit ensemble de suspension et ledit turboréacteur (3).

9. Ensemble propulsif selon la revendication 8, **caractérisé en ce qu'**il comprend des canaux de prélèvement d'air (39a, 39b) dans la zone de flux secondaire (33) de ladite nacelle, pour refroidir lesdits moyens d'isolation thermique (19 ; 25).

## Patentansprüche

1. Hängeanordnung für ein Turbotriebwerk (3) eines Luftfahrzeugs, die einen Mast (1) und Übernahmepleuelstangen (13a, 13b) des Schubs des Turbotriebwerks (3) umfasst, die mit dem Mast (1) verbunden sind, **dadurch gekennzeichnet, dass** sie Mittel (19, 25) umfasst, die sich vom Mast (1) unterscheiden, um die Pleuelstangen (13a, 13b) im Verhältnis zum Turbotriebwerk (3) thermisch zu Isolieren.

2. Hängeanordnung nach Anspruch 1, **dadurch gekennzeichnet, dass** die Isolationsmittel für jede Schub-Übernahmepleuelstange (13a, 13b) unabhängige Isolationshüllen umfassen.

3. Hängeanordnung nach Anspruch 1, **dadurch gekennzeichnet, dass** die Isolationsmittel eine für die Pleuelstangen (13a, 13b) gemeinsame Isolationshülle (19) umfassen.

4. Hängeanordnung nach einem der Ansprüche 2 oder 3, **dadurch gekennzeichnet, dass** die Hülle(n) (19) entfernbar ist/sind.

5. Hängeanordnung nach Anspruch 1, **dadurch gekennzeichnet, dass** die thermischen Isolationsmittel eine Isolations-Treannwand (25) umfassen, die zwischen den Schub-Übernahmepleuelstange (13a, 13b) und der Zone positioniert ist, die zur Belegung durch das Turbotriebwerk (3) bestimmt ist.

6. Hängeanordnung nach Anspruch 5, **dadurch gekennzeichnet, dass** die Trennwand (25) auf dem Mast (1) und/oder auf den Pleuelstangen (13a, 13b) befestigt ist und/oder auf dem Turbotriebwerk (3) befestigbar ist.

7. Hängeanordnung nach einem der Ansprüche 5 oder 6, **dadurch gekennzeichnet, dass** Dichtungen (35a, 35b) auf den Rändern der Trennwand (25) angeordnet sind, die zur Zusammenarbeit mit einer internen Struktur (31a, 31 b) der Gondel bestimmt sind.

8. Antriebsgruppe, die eine Hängeanordnung nach einem der vorangehenden Ansprüche, ein an der Hängeanordnung aufgehängtes Turbotriebwerk (3) und eine Gondel umfasst, die die Hängeanordnung und das Turbotriebwerk (3) umschließt.

9. Antriebsgruppe nach Anspruch 8, **dadurch gekennzeichnet, dass** sie Luftentnahmekanäle (39a, 39b) in der Zone des sekundären Stroms (33) der Gondel umfasst, um die thermischen Isolationsmittel (19; 25) zu kühlen.

## Claims

1. A suspension assembly for an aircraft turbojet engine (3), comprising a pylon (1) and connecting rods (13a, 13b) for taking up the thrust of said turbojet engine (3) connected to said pylon (1), **characterized in that** it comprises means (19, 25), distinct from said pylon (1), for thermally insulating said connecting rods (13a, 13b) with respect to said turbojet engine (3).

2. Ensemble de suspension selon la revendication 1 , **caractérisé en ce que** lesdits moyens d'isolation comprennent des gaines d'isolation indépendantes pour chaque bielle de reprise de poussée (13a, 13b). The suspension assembly according to claim 1, **characterized in that** said insulating means comprise Independent insulating sheaths for each connecting rod (13a, 13b) taking up the thrust.

3. The suspension assembly according to claim 1, **characterized In that** said insulating means comprise an insulation sheath (19) common to said connecting rods (13a, 13b).

4. The suspension assembly according to one of claims 2 or 3, **characterized in that** said sheath(s) (19) is(are) removable.

5. The suspension assembly according to claim 1, **characterized in that** said thermal insulation means comprise an insulation partition (25) positioned between said connecting rods (13a, 13b) for taking up the thrust and the area intended to be occupied by said turbojet engine (3).

6. The suspension assembly according to claim 5, **characterized in that** said partition (25) is attached on said pylon (1) and/or on said connecting rods (13a, 13b) and/or is able to be attached on said turbojet engine (3).

7. The suspension assembly according to one of claims 5 or 6, **characterized in that** seal gaskets (35a, 35b) are positioned on the edges of said partition (25) which are intended to co-operate with a nacelle internal structure (31 a, 31b).

8. A propulsion assembly, comprising a suspension assembly according to any of the preceding claims, a turbojet engine (3) suspended from said suspension assembly, and a nacelle encasing said suspension assembly and said turbojet engine (3).

9. The propulsion assembly according to claim 8, **characterized in that** it comprises air bleeding channels (39a, 39b) in the secondary flow area (33) of said nacelle, for cooling said thermal insulation means (19; 25).
